# EUROPÄISCHE PATENTSCHRIFT

(11) **EP 2 499 715 B1**
(45) Veröffentlichungstag und Bekanntmachung des Hinweises auf die Patenterteilung: **06.12.2017**
(21) Anmeldenummer: 10768687.5
(22) Anmeldetag: 09.10.2010
(51) Int. Cl.: H02J 7/14, H02J 1/10, B60L 11/18

(54) **MEHRSPANNUNGSBORDNETZ FÜR EIN KRAFTFAHRZEUG**
MULTI-VOLTAGE ON-BOARD POWER SUPPLY SYSTEM FOR A MOTOR VEHICLE
RÉSEAU DE BORD À TENSION MULTIPLE DESTINÉ À UN VÉHICULE À MOTEUR

(30) Priorität: 11.11.2009 DE 102009052769
(43) Veröffentlichungstag der Anmeldung: 19.09.2012
(73) Patentinhaber: Bayerische Motoren Werke Aktiengesellschaft, 80809 München (DE)
(72) Erfinder: FROESCHL, Joachim, 82211 Herrsching (DE); WANKE, Christoph, 86415 Mering (DE); REITER, Tomas, 81539 München (DE)
(74) Vertreter: Kammermeier, Peter Frank
(86) Internationale Anmeldenummer: PCT/EP2010/006174
(87) Internationale Veröffentlichungsnummer: WO 2011/057699

(56) Entgegenhaltungen:
- WO-A2-2004/095671
- DE-A1-102007 001 673

## Beschreibung

Die Erfindung betrifft ein Mehrspannungsbordnetz für ein Kraftfahrzeug mit Hybrid- oder Elektroantrieb, umfassend einen Gleichspannungswandler, über welchen eine Hochvoltebene mit höherer von Masse verschiedener Gleichspannung und zumindest einem ersten Energiespeicher mit einer Niedervoltebene mit niedrigerer von Masse verschiedener Spannung und zumindest einem zweiten Energiespeicher verbunden ist.

Solche Mehrspannungsbordnetze mit Gleichspannungswandlern (DCDC-Wandlern) sind vielfach aus dem Stand der Technik bekannt. Ein Gleichspannungswandler kann Energiebordnetze unterschiedlicher Spannungen energetisch verbinden. Zur Erhöhung der Leistungsdichte des Gleichspannungswandlers und zur Erhöhung seiner Stromtragfähigkeit werden Gleichspannungswandler oft mehrphasig ausgeführt. Es handelt sich dabei vorzugsweise (im Folgenden wird hiervon ausgegangen) um eine Parallelschaltung mehrerer Wandlerstufen. Bei einer zeitlich versetzten Ansteuerung der Leistungsschalter um (360 Grad geteilt durch die Anzahl der Wandlerphasen) überlagern sich die Stromwelligkeiten an den Ausgangsklemmen und Buskondensatoren, wodurch der Bauteilstress insbesondere an den Buskondensatoren reduziert werden kann.

Mehrspannungsbordnetze werden im Stand der Technik unter anderem zur Erhöhung der Spitzenleistungsfähigkeit verwendet (z.B. Hybrid-Antrieb, Elektrifizierung von Nebenaggregaten). Leistungsfähige Gleichspannungswandler, die typischerweise mehrphasig ausgeführt sind, verbinden diese Teilbordnetze.

Das Dokument DE 10 2007 001 673 A1 offenbart ein Bordnetzsystem für ein Kraftfahrzeug umfassend einen Hochvolt-Energiespeicher zur Bereitstellung eines Hochvolt-Spannungsnetzes für die Spannungsversorgung eines oder mehrerer Hochvolt-Verbraucher, eine erste Wandlereinrichtung zur Wandlung der Hochvoltspannung des Hochvolt-Spannungsnetzes auf eine vorbestimmte Niedervoltspannung eines Niedervolt-Spannungsnetzes für die Spannungsversorgung eines oder mehrerer Niedervolt-Verbraucher sowie eine zweite Wandlereinrichtung, die parallel zu der ersten Wandlereinrichtung geschaltet ist und über die zumindest zeitweise ein vorbestimmter Energieeintrag in das Niedervolt-Spannungsnetz erfolgt.

Es ist eine Aufgabe der Erfindung, die Funktionalität eines Mehrspannungsbordnetzes auf kostengünstige Art und Weise zu erweitern.

Gelöst wird diese Aufgabe durch ein Mehrspannungsbordnetz gemäß Anspruch 1. Vorteilhafte Ausführungsformen und Weiterbildungen der Erfindung ergeben sich aus den abhängigen Ansprüchen.

Die Erfindung führt gegenüber der Bereitstellung eines separaten Ladegeräts - zusätzlich zu dem Gleichspannungswandler - zu einer Reduzierung teurer, schwerer und voluminöser

Komponenten. Somit können die Gesamtkosten reduziert werden und der erforderliche Bauraum minimiert werden. Zudem kann Gewicht und infolgedessen Kraftstoff eingespart werden.

An sich ist die funktionale und bauliche Integration von Ladegeräten in ein Kraftfahrzeug aus dem Stand der Technik bekannt. Durch die Integration eines geeigneten Ladegeräts können in zukünftigen Kraftfahrzeugen, insbesondere Stadtfahrzeugen, externe Geräte, beispielsweise kleine Elektroroller, in praktischer Art und Weise aufgeladen werden. Die Möglichkeit, ein externes Gerät in einem Kraftfahrzeug-Energiebordnetz zu laden, stellt eine überaus kundenwertige Funktion dar. Die aus dem Stand der Technik bekannten Ladegeräte enthalten häufig eigene Gleichspannungswandler, über welche das jeweilige externe Gerät aus dem Energiebordnetz des Kraftfahrzeugs geladen werden kann.

Erfindungsgemäß wird zumindest eine Wandlerphase des ohnehin für die verschiedenen Spannungsebenen des Mehrspannungsbordnetzes bereitgestellten Gleichspannungswandlers für das Aufladen des externen Geräts verwendet.

Dazu wird bei dem Mehrspannungsnetz eine Ladeschnittstelle zum Aufladen externer Geräte bereitgestellt. Das Mehrspannungsnetz und insbesondere der Gleichspannungswandler bzw. dessen Beschaltung werden dabei so ausgeführt, dass zumindest eine Wandlerphase des Gleichspannungswandlers von der Niedervoltebene abtrennbar ist und stattdessen mit der Ladeschnittstelle verbindbar ist. Zudem wird ein dritter - aufzuladender - Energiespeicher bereitgestellt, der vorzugsweise Bestandteil eines externen Geräts ist und der an die Ladeschnittstelle anschließbar ist. Im an die Ladeschnittstelle angeschlossenen Zustand wird dieser dritte Energiespeicher mit der niedrigeren Spannung des Mehrspannungsnetzes versorgt und so wird ein Aufladen des dritten Energiespeichers durch Energiefluss vom ersten Energiespeicher zum dritten Energiespeicher ermöglicht.

Das Mehrspannungsbordnetz kann insbesondere als Zweispannungsbordnetz mit ausschließlich einer Hochvoltebene und einer Niedervoltebene ausgeführt sein.

Der Gleichspannungswandler ist im einfachsten Fall einphasig ausgeführt. Es ist dann die einzige Wandlerphase des Gleichspannungswandlers von der Niedervoltebene abtrennbar und stattdessen mit der Ladeschnittstelle verbindbar.

Gemäß einer bevorzugten Ausführungsform der vorliegenden Erfindung umfasst jedoch der Gleichspannungswandler mehrere parallel geschaltete Wandlerphasen. Er ist dann vorzugswiese in zumindest einem ersten und einem zweiten Betriebsmodus betreibbar. In dem ersten Betriebsmodus sind sämtliche Wandlerphasen des Gleichspannungswandlers mit dem zweiten Energiespeicher verbunden und keine Wandlerphase ist mit der Ladeschnittstelle verbunden. Der Gleichspannungswandler steht dann ausschließlich für die Spannungswandlung zwischen der Hochvoltebene und der Niedervoltebene zur Verfügung. Im zweiten Betriebsmodus hingegen ist zumindest eine Wandlerphase des Gleichspannungswandlers mit dem zweiten Energiespeicher verbunden und zumindest eine andere Wandlerphase des Gleichspannungswandlers ist mit der Ladeschnittstelle verbunden. Die Wandlerphasen des Gleichspannungswandlers werden also teilweise zum Aufladen des dritten Energiespeichers genutzt, stehen aber auch teilweise weiterhin für die Spannungswandlung zwischen der Hochvoltebene und der Niedervoltebene zur Verfügung.

Um Bauteilstress zu verringern, insbesondere für einen optional auf Seiten der Hochvoltebene parallel zum ersten Energiespeicher geschalteten Buskondensator, können im zweiten Betriebsmodus die Wandlerphasen versetzt angesteuert werden.

Die niedrigere Spannung (Niedervoltebene) ist vorzugsweise eine kraftfahrzeugtypische Bordnetzspannung von etwa 12 Volt. Die Hochvoltebene ist vorzugsweise mit einer Traktionsbatterie des Kraftfahrzeugs bzw. des Hybrid- oder Elektroantriebs des Kraftfahrzeugs verbunden.

Das oben genannte Abtrennen zumindest einer Wandlerphase von der Niedervoltebene und ihr Verbinden mit der Ladeschnittstelle ist vorzugsweise durch ein einziges elektronisch steuerbares Schaltelement vornehmbar. Die Betriebsmodi können somit besonders einfach gewechselt werden, die Umschaltung kann synchronisiert erfolgen.

Umfasst der Gleichspannungswandler mehr als zwei Wandlerphasen, so kann durch geeignete Umschaltmittel eine variable Aufteilung der Gesamtleistung des Gleichspannungswandlers zwischen den "Aufgaben" Gleichspannungswandlung und Aufladen externer Geräte ermöglicht werden. So kann beispielsweise bei Vorhandensein von N Wandlerphasen wahlweise eine Wandlerphase oder zwei Wandlerphasen oder bis zu (N-1) Wandlerphasen für das Aufladen externer Geräte abgestellt werden, während die übrigen Wandlerphasen weiterhin für die Gleichspannungswandlung zur Verfügung stehen.

Die (ggf. als ein einziges elektronisch steuerbares Schaltelement ausgeführten) Umschaltmittel zum Abtrennen zumindest einer Wandlerphase von der Niedervoltebene und zu ihrem Verbinden mit der Ladeschnittstelle sind vorzugsweise gemeinsam mit den Wandlerphasen des Gleichspannungswandlers in eine Gerätekomponente bzw. in ein Gehäuse integriert. Auch eventuell vorgesehene Buskondensatoren sind vorzugsweise mit in diese Gerätekomponente bzw. in dieses Gehäuse integriert.

Die Ladeschnittstelle ist vorzugsweise als Steckkontakt oder Schalter ausgeführt ist. An einen Steckkontakt kann ein externes Gerät besonders einfach angeschlossen werden. Insbesondere weist ein eventueller Steckkontakt vorzugsweise eine mit einem hinsichtlich seines Ladeanschlusssteckers genormten externen Gerät kompatible genormte Ladeanschlussbuchse auf.

Gemäß einer bevorzugten Ausführungsform der vorliegenden Erfindung ist ein Anschließen des dritten Energiespeichers an die Ladeschnittstelle detektierbar und in Abhängigkeit von dieser Detektion ist das Abtrennen von der Niedervoltebene und das Verbinden mit der Ladeschnittstelle automatisch steuerbar. Insbesondere sind vorzugsweise die oben genannten Umschaltmittel (insbesondere wenn sie als ein einziges elektronisch steuerbares Schaltelement ausgeführt sind) in Abhängigkeit von dieser Detektion steuerbar. Der Wechsel der Betriebsmodi kann dann selbsttätig erfolgen, sobald ein aufzuladendes externes Gerät an die Ladeschnittstelle angeschlossen wird.

Im Folgenden werden anhand der beigefügten Zeichnungen bevorzugte Ausführungsbeispiele der Erfindung beschrieben. Daraus ergeben sich weitere Details, bevorzugte Ausführungsformen und Weiterbildungen der Erfindung. Im Einzelnen zeigen schematisch
- Fig. 1: eine Umsetzung der Erfindung auf Basis eines mehrphasigen Gleichspannungswandlers,
- Fig. 2: eine Umsetzung der Erfindung auf Basis eines einphasigen Gleichspannungswandlers.

Ein im Folgenden beschriebenes Kraftfahrzeug ist als Hybrid- oder Elektrofahrzeug ausgebildet, besitzt ein Zweispannungsbordnetz mit einer Hochvolt-Ebene (Traktionsbatterie) und einer Niedervolt-Ebene (12 Volt) und umfasst einen Gleichspannungswandler (im Folgenden als DCDC-Wandler bezeichnet) zwischen der Hochvolt-Ebene und der 12-Volt-Bordnetzversorgung.

Der DCDC-Wandler ist in unterschiedlichen Betriebsmodi betreibbar.

Ein erster Betriebsmodus (M1) bedeutet: DCDC-Wandlung von Hochvolt nach 12 Volt zur Versorgung des Bordnetzes aus der Traktionsbatterie, bzw. aus dem Hochvoltsystem.

Ein zweiter Betriebsmodus (M2) bedeutet: Laden eines Onboard-Gerätes (im Stand oder während der Fahrt des Kraftfahrzeugs) mittels Umschaltung des DCDC-Wandlers in eine Ladebetriebsart.

Beim vorliegend beschriebenen DCDC-Wandler lassen sich der erste und der zweite Betriebsmodus in einem dritten Betriebsmodus (M3) vorteilhaft kombinieren. Dies setzt voraus, dass der DCDC-Wandler mehrere Wandlerphasen umfasst, mittels derer er (insbesondere im ersten Betriebsmodus M1) die Gleichspannungswandlung zwischen Hochvolt-Ebene und Niedervolt-Ebene bewirkt. Die oben genannte Umschaltung des DCDC-Wandlers in eine Ladebetriebsart beschränkt sich dabei auf einzelne dieser Wandlerphasen. Ein erster Teil der Wandlerphasen führt dann weiterhin die Gleichspannungswandlung gemäß Modus M1 durch, der restliche Teil der Wandlerphasen führt das Laden gemäß Modus M2 durch. Die DCDC-Leistung nimmt dabei gegenüber einem "reinen" Modus M1 zu Gunsten der Ladeleistung ab.

Bei entsprechender Gestaltung der Umschaltmittel kann die Anzahl der Wandlerphasen, die im Modus M3 für den Ladebetrieb eingesetzt werden, variiert werden. In welchem Maße die DCDC-Leistung im Modus M3 zu Gunsten der Ladeleistung verringert wird, kann durch eine entsprechende Aufteilung der Wandlerphasen bzw. Festlegung der genannten Anzahl gesteuert werden. Bei Vorhandensein von N Wandlerphasen werden im Modus M3 zwischen einer und (N-1) Wandlerphasen zum Laden des externen Gerätes verwendet.

Grundsätzlich können die Umschaltmittel auch so ausgestaltet werden, dass weiterhin eine vollständige Umschaltung des DCDC-Wandlers (d.h. aller Wandlerphasen) in einen reinen Ladebetrieb (Modus M2) möglich bleibt.

Die für die Realisierung des kombinierten Modus M3 erforderliche Vorrichtung wird geschaffen durch Modifikation eines konventionellen mehrphasigen DCDC-Wandlers derart, dass einerseits geeignete Umschaltmittel vorgesehen werden zum Abtrennen einzelner Wandlerphasen von der Niedervoltebene und zu ihrem Verbinden mit einer Ladeschnittstelle und dass andererseits die Umschaltung/Trennung gemäß den genannten Betriebsmodi (zumindest M1 und M3, gegebenenfalls auch M2) in Software implementiert wird und die Umschaltmittel entsprechend angesteuert werden.

Der Hardware-Aufwand für die parallele bzw. zeitgleiche Erfüllung der beiden "Aufgaben" Gleichspannungswandlung und Aufladen externer Geräte liegt bei einer solchen Vorrichtung deutlich niedriger als bei einer Bereitstellung zweier getrennter Geräte (konventioneller DCDC-Wandler für Bordnetz und separates Ladegerät) in einem oder in auch in zwei Gehäusen.

Wird kein Ladebetrieb gefordert, kann hierdurch eine Stützung des 12-Volt-Bordnetzes erfolgen und der DCDC-Wandler damit entlastet werden.

Bei Bedarf ist eine spezielle Ausgestaltung der Ladegerätphasen für höhere Spannungen als 12 Volt denkbar.

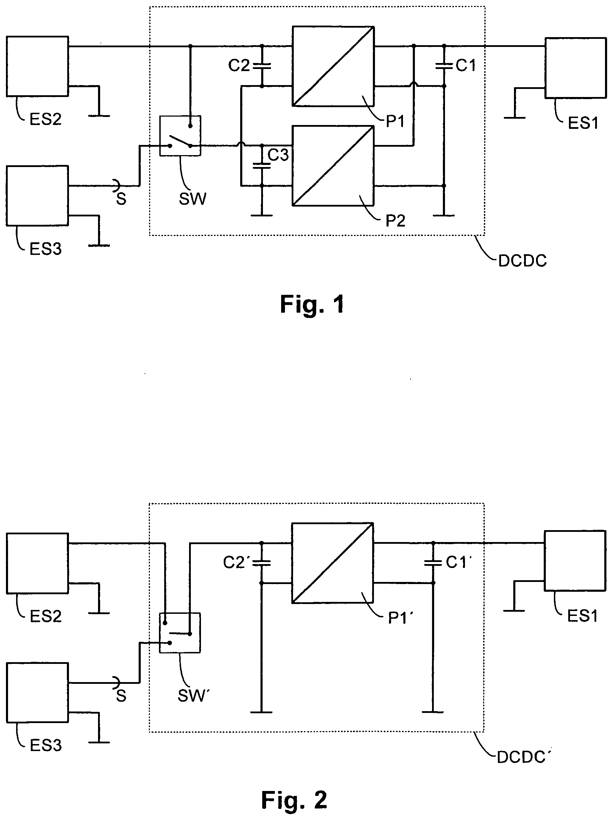

Fig. 1 zeigt einen Gleichspannungswandler DCDC, der als Mehrphasenwandler mit einer ersten Phase P1 und einer zweiten P2 ausgeführt ist, wobei die Phasen mit einem Schalter SW auf mindestens einer Seite auftrennbar sind. Der Wandler ist mit Energiebordnetzen verbunden, die typischerweise Energiespeicher enthalten. ES1 stellt im vorliegenden Beispielfall einen Energiespeicher im Hochvolt-Bordnetz dar, ES2 einen Energiespeicher im Niedervolt-Bordnetz. Ein dritter Energiespeicher ES3 ist mit einem Steckkontakt oder Schalter S vom Gleichspannungswandler trennbar. Dieser dritte Energiespeicher ES3 gehört zu einem externen Gerät (z.B. Elektroroller) und soll in einem Modus M3 des Gleichspannungswandlers DCDC aufgeladen werden.

Sobald das externe Gerät ES3 über den Steckverbinder S angeschlossen ist, wird der Mehrphasenwandler DCDC durch den Schalter SW aufgetrennt. Es handelt sich dann um zwei separate Wandlerstufen P1 und P2. Der Energietransfer von ES1 nach ES2 kann reduziert (nur noch unter Verwendung von P1) fortgesetzt werden. ES3 kann (unter Verwendung von P2) aus ES1 geladen werden.

Die Ein-/Ausgänge der Wandlerphasen sind mit Buskondensatoren beschaltet. Auf der Seite von ES1 ist ein Buskondensator C1 parallel zu ES1 geschaltet. Ein Buskondensator C2 ist (unabhängig von der Schalterstellung des Schalters SW) parallel zu ES2 geschaltet. Ein Buskondensator C3 ist wahlweise parallel zu ES2 geschaltet (bei Verbindung von ES2 mit P2) oder parallel zu ES3 geschaltet (bei Verbindung von ES3 über S mit P2).

Durch eine versetzte Ansteuerung der Wandlerstufen kann der Bauelementestress im Buskondensator C1 reduziert werden.

Wenn das Gerät ES3 nicht an S angeschlossen ist, wird der Wandler DCDC vorzugsweise wieder zu einem Mehrphasenwandler verbunden (vgl. Modus M1), d.h. ES2 wird wieder mit P2 verbunden. Der Energietransfer ES1 nach ES2 ist dann wieder mit der vollen Wandlerleistung möglich. Durch eine versetzte Ansteuerung wird zudem der Bauteilstress in diesem Betrieb in allen Buskondensatoren reduziert.

Weiterhin vorteilhaft an der beschriebenen Konfiguration ist, dass mit dem zusätzlichen Energiespeicher ES3 die Teilbordnetze ES1 und ES2 gestützt werden können. Denkbar ist z.B. ein Laden von ES1 aus ES2 mit konstanten Strömen, um ES2 transient nicht zu belasten. Zur Reduktion fluktuierender Spannungen im Netz ES1 (z.B. ausgelöst durch transiente Hochleistungsverbraucher) kann der transiente Bedarf vollständig oder zum Teil aus ES3 gedeckt werden.

Fig. 2 zeigt einen einphasigen Gleichspannungswandler DCDC' mit nur einer Phase P1'. Durch einen Schalter SW' kann die einzige Wandlerphase P1' wahlweise zur Gleichspannungswandlung (bei Verbindung von ES2 mit P1') oder zum Aufladen eines an die Ladeschnittstelle S angeschlossenen Energiespeichers ES3 (bei Verbindung von ES2 über S mit P1') verwendet werden.

Die Erfindung erlaubt eine optimale Bauraumausnutzung und eine Gewichtsminimierung. Die gemäß dem Stand der Technik erforderliche Verwendung zweier Geräte (konventioneller DCDC-Wandler für Bordnetz und separates Ladegerät) ist kosten- und bauraumintensiv, selbst wenn beide Geräte in ein Gehäuse integriert sind.

Die Erfindung behebt verschiedene Effizienzdefizite des Stands der Technik: Beruhend auf der Erkenntnis, dass einerseits selbst dann, wenn bei einem Kraftfahrzeug eine Ladeschnittstelle bereitgestellt wird, verhältnismäßig selten externe Geräte an dieser geladen werden, weshalb ein ausschließlich zu Ladezwecken vorgesehener Wandler in der Regel nur geringfügig ausgenutzt wird, und dass andererseits die volle Leistungsfähigkeit eines gegebenenfalls mehrphasigen Wandlers zur Verbindung der Teilbordnetze eines modernen Mehrspannungsbordnetzes nur selten genutzt wird, werden gezielt vergleichbare Komponenten nur einfach vorgesehen und gemeinsam für die beiden unterschiedlichen Zwecke genutzt. Auch die Kosteneffizienz wird somit gesteigert.

## Patentansprüche

1. Mehrspannungsbordnetz für ein Kraftfahrzeug mit Hybrid- oder Elektroantrieb, umfassend einen Gleichspannungswandler (DCDC), über welchen eine Hochvoltebene mit höherer von Masse verschiedener Gleichspannung und zumindest einem ersten Energiespeicher (ES1) mit einer Niedervoltebene mit niedrigerer von Masse verschiedener Spannung und zumindest einem zweiten Energiespeicher (ES2) verbunden ist,
**dadurch gekennzeichnet,**
**dass** das Mehrspannungsbordnetz eine Ladeschnittstelle (S) zum Aufladen externer Geräte umfasst,
**dass** zumindest eine Wandlerphase des Gleichspannungswandlers von der Niedervoltebene abtrennbar und stattdessen mit der Ladeschnittstelle verbindbar ist, dass ein dritter Energiespeicher (ES3) an die Ladeschnittstelle anschließbar ist, um den dritten Energiespeicher im angeschlossenen Zustand mit der niedrigeren Spannung zu versorgen und ein Aufladen des dritten Energiespeichers durch Energiefluss vom ersten Energiespeicher zum dritten Energiespeicher zu ermöglichen.

2. Mehrspannungsbordnetz nach Anspruch 1, **dadurch gekennzeichnet,**
**dass** der Gleichspannungswandler einphasig ausgeführt ist.

3. Mehrspannungsbordnetz nach Anspruch 1, **dadurch gekennzeichnet,**
**dass** der Gleichspannungswandler mehrere parallel geschaltete Wandlerphasen (P1, P2) umfasst und in zumindest einem ersten und einem zweiten Betriebsmodus betreibbar ist,
wobei in dem ersten Betriebsmodus (M1) sämtliche Wandlerphasen des Gleichspannungswandlers mit dem zweiten Energiespeicher verbunden sind und keine Wandlerphase mit der Ladeschnittstelle verbunden ist und
wobei in dem zweiten Betriebsmodus (M3) zumindest eine Wandlerphase (P1) des Gleichspannungswandlers mit dem zweiten Energiespeicher verbunden ist und zumindest eine andere Wandlerphase (P2) des Gleichspannungswandlers mit der Ladeschnittstelle verbunden ist.

4. Mehrspannungsbordnetz nach Anspruch 3, **dadurch gekennzeichnet,**
**dass** im zweiten Betriebsmodus die Wandlerphasen versetzt angesteuert werden.

5. Mehrspannungsbordnetz nach einem der Ansprüche 1 bis 4, **dadurch gekennzeichnet, dass** die niedrigere Spannung eine kraftfahrzeugtypische Bordnetzspannung von etwa 12 Volt ist.

6. Mehrspannungsbordnetz nach einem der Ansprüche 1 bis 5, **dadurch gekennzeichnet, dass** die Hochvoltebene mit einer Traktionsbatterie des Kraftfahrzeugs verbindbar ist.

7. Mehrspannungsbordnetz nach einem der Ansprüche 1 bis 6, **dadurch gekennzeichnet, dass** das Abtrennen von der Niedervoltebene und das Verbinden mit der Ladeschnittstelle durch ein einziges elektronisch steuerbares Schaltelement (SW) vornehmbar ist.

8. Mehrspannungsbordnetz nach einem der Ansprüche 1 bis 7, **dadurch gekennzeichnet, dass** die Ladeschnittstelle als Steckkontakt oder Schalter ausgeführt ist.

9. Mehrspannungsbordnetz nach einem der Ansprüche 1 bis 8, **dadurch gekennzeichnet, dass** ein Anschluss des dritten Energiespeichers an die Ladeschnittstelle detektierbar ist und in Abhängigkeit von dieser Detektion das Abtrennen von der Niedervoltebene und das Verbinden mit der Ladeschnittstelle automatisch steuerbar ist.

10. Mehrspannungsbordnetz nach einem der Ansprüche 1 bis 9, **dadurch gekennzeichnet, dass** der Gleichspannungswandler sowie die Umschaltmittel (SW), die zum Abtrennen von der Niedervoltebene und zum Verbinden mit der Ladeschnittstelle erforderlich sind sowie eventuelle Kondensatoren (C1, C2, C3) an den Ein- und Ausgängen der Wandlerphasen des Gleichspannungswandlers in ein gemeinsames Gehäuse (DCDC) integriert sind.

## Claims

1. A multi-voltage on-board power supply system for a motor vehicle having a hybrid or electric drive, comprising a DC-DC converter (DCDC), by means of which a high-voltage level having a higher DC voltage different from ground and at least one first energy storage device (ES1) is connected to a low-voltage level having a lower voltage different from ground and at least one second energy storage device (ES2),
**characterised in that** the multi-voltage on-board power supply system comprises a charging interface (S) for charging external devices,
**in that** at least one converter phase of the DC-DC voltage converter can be separated from the low-voltage level and can be connected instead to the charging interface,
**in that** a third energy storage device (ES3) can be plugged into the charging interface in order to supply the third energy storage device, in the plugged state, with the lower voltage and so as to enable a charging of the third energy storage device by energy flow from the first energy storage device to the third energy storage device.

2. A multi-voltage on-board power supply system according to claim 1,
**characterised in that** the DC-DC voltage converter is of single-phase configuration.

3. A multi-voltage on-board power supply system according claim 1,
**characterised in that** the DC-DC voltage converter comprises a plurality of converter phases (P1, P2) connected in parallel and can be operated in at least a first and a second operating mode, wherein, in the first operating mode (M1), all converter phases of the DC-DC voltage converter are connected to the second energy storage device and no converter phase is connected to the charging interface, and
wherein, in the second operating mode (M3), at least one converter phase (P1) of the DC-DC voltage converter is connected to the second energy storage device and at least one other converter phase (P2) of the DC-DC voltage converter is connected to the charging interface.

4. A multi-voltage on-board power supply system according to claim 3,
**characterised in that** in the second operating mode the converter phases are controlled in a staggered manner.

5. A multi-voltage on-board power supply system according to any one of claims 1 to 4, **characterised in that** the lower voltage is an onboard power supply system voltage of approximately 12 volts, typical for a motor vehicle.

6. A multi-voltage on-board power supply system according to any one of claims 1 to 5, **characterised in that** the high-voltage level can be connected to a traction battery of the motor vehicle.

7. A multi-voltage on-board power supply system according to any one of claims 1 to 6, **characterised in that** the disconnection from the low-voltage level and the connection to the charging interface can be performed by a single electronically controllable switching element (SW).

8. A multi-voltage on-board power supply system according to any one of claims 1 to 7, **characterised in that** the charging interface is embodied as a plug contact or switch.

9. A multi-voltage on-board power supply system according to any one of claims 1 to 8, **characterised in that** a plugging of the third energy storage device into the charging interface can be detected and the separation from the low-voltage plane and the connection to the charging interface can be automatically controlled depending on this detection.

10. A multi-voltage on-board power supply system according to any one of claims 1 to 9, **characterised in that** the DC-DC voltage converter and the switchover means (SW), which are necessary for disconnecting from the low-voltage level and for connecting to the charging interface, and any capacitors (C1, C2, C3) at the inputs and outputs of the converter phases of the DC-DC voltage converter are integrated in a common housing (DCDC).

## Revendications

1. Réseau de bord multi-tension pour un véhicule automobile à entraînement hybride ou électrique comportant un convertisseur de tension continu / continu (DC/DC) reliant un niveau haute tension continue différent, supérieur à celui de la masse et au moins un premier accumulateur d'énergie (ES1) à un niveau basse tension de niveau différent, inférieur à celui de la masse et au moins un second accumulateur d'énergie (ES2),
**caractérisé en ce que**
- le réseau de bord multi-tension comporte une interface de charge (S) pour charger des appareils externes,
- au moins une phase de conversion du convertisseur de tension continue peut être coupée du niveau basse tension et être, au lieu de cela, reliée à l'interface de charge,
- un troisième accumulateur d'énergie (ES3) peut être relié à l'interface de charge pour alimenter le troisième accumulateur d'énergie à l'état branché avec la tension la plus faible et pour charger le troisième accumulateur d'énergie par le passage d'énergie du premier accumulateur d'énergie au troisième accumulateur d'énergie.

2. Réseau de bord multi-tension selon la revendication 1,
**caractérisé en ce que**
le convertisseur de tension continue est monophase.

3. Réseau de bord multi-tension selon la revendication 1,
**caractérisé en ce que**
le convertisseur de tension continue a plusieurs phases de conversion (P1, P2) en parallèle et peut fonctionner dans au moins un premier et un second modes de fonctionnement,
- et dans le premier mode de fonctionnement (M1), toutes les phases de conversion du convertisseur de tension continue sont reliées au second accumulateur d'énergie et aucune phase de conversion est reliée à l'interface de charge, et
- dans le second mode de fonctionnement (M3), au moins une phase de conversion (P1) du convertisseur de tension continue est reliée au second accumulateur d'énergie et au moins une autre phase de conversion (P2) du convertisseur de tension continue est reliée à l'interface de charge.

4. Réseau de bord multi-tension selon la revendication 3,
**caractérisé en ce que**
les phases de conversion sont commandées de manière décalée dans le second mode de fonctionnement.

5. Réseau de bord multi-tension selon l'une des revendications 1 à 4,
**caractérisé en ce que**
la tension la plus basse est une tension de réseau embarqué caractéristique d'un véhicule automobile qui est de l'ordre de 12 Volts.

6. Réseau de bord multi-tension selon l'une des revendications 1 à 5,
**caractérisé en ce que**
le niveau haute-tension peut être relié à une batterie de traction du véhicule automobile.

7. Réseau de bord multi-tension selon l'une des revendications 1 à 6,
**caractérisé en ce que**
la coupure du niveau basse-tension et la liaison avec l'interface de charge est faite par un unique élément de commutation à commande électronique SW.

8. Réseau de bord multi-tension selon l'une des revendications 1 à 7,
**caractérisé en ce que**
l'interface de charge est un contact par enfichage ou un commutateur.

9. Réseau de bord multi-tension selon l'une des revendications 1 à 8,
**caractérisé en ce que**
le branchement du troisième accumulateur d'énergie à l'interface de charge se détecte et en fonction de cette détection, la coupure du niveau de tension la plus basse et la liaison avec l'interface de charge se commandent automatiquement.

10. Réseau de bord multi-tension selon l'une des revendications 1 à 9,
**caractérisé en ce que**
le convertisseur de tension continue ainsi que le moyen de commutation (SW) nécessaire pour couper le niveau de tension le plus bas et pour relier à l'interface de charge ainsi que d'éventuels condensateurs (C1, C2, C3) aux entrées et sorties des phases de conversion du convertisseur de tension continue sont intégrés dans un boîtier commun (DC/DC).
